# EUROPÄISCHE PATENTSCHRIFT

(11) **EP 0 464 397 B1**
(45) Veröffentlichungstag und Bekanntmachung des Hinweises auf die Patenterteilung: **07.12.1994**
(21) Anmeldenummer: 91109387.0
(22) Anmeldetag: 07.06.1991
(51) Int. Cl.: H01M 2/26

(54) **Verfahren zum Anbringen eines Ableiters an eine ein Metallschaumgerüst als Trägerteil enthaltende Elektrode**
Method for securing a current collector to an electrode comprising a metallic spongeous supporting structure
Procédé pour attacher un collecteur de courant à une électrode comportant un support en mousse métallique

(30) Priorität: 15.06.1990 DE 4019256
(43) Veröffentlichungstag der Anmeldung: 08.01.1992
(73) Patentinhaber: VARTA Batterie Aktiengesellschaft, D-30405 Hannover (DE)
(72) Erfinder: Sauer, Hans, W-6270 Idstein-Waldorf (DE)
(74) Vertreter: Kaiser, Dieter Ralf, Dipl.-Ing.

(56) Entgegenhaltungen:
- DE-C- 3 817 982
- PATENT ABSTRACTS OF JAPAN vol. 4, no. 44 (E-5)(526) 5. April 1980& JP-A-55 014 685
- PATENT ABSTRACTS OF JAPAN vol. 13, no. 534 (E-852)(3882) 29. November 1989& JP-A-01 220 370
- PATENT ABSTRACTS OF JAPAN vol. 13, no. 364 (E-805)(3712) 14. August 1989& JP-A-01 120 761
- PATENT ABSTRACTS OF JAPAN vol. 14, no. 380 (E-965)(4323) 16. August 1990& JP-A-02 139 858
- PATENT ABSTRACTS OF JAPAN vol. 12, no. 330 (E-655)(3177) 7. September 1988& JP-A-63 094 558

## Beschreibung

Die Erfindung betrifft ein Verfahren zum elektrischen und mechanischen Verbinden eines als Ableiter dienenden Metallstreifens mit der Elektrode eines galvanischen Elements, die als Träger ein Metallschaumgerüst besitzt, das mit aktiver Masse gefüllt ist, welche ein organisches Bindemittel enthält.

Die einwandfreie Anbringung von Stromableitern an Batterieelektroden setzt an den vorgesehenen Kontaktstellen ein offenliegendes und nicht von aktivem Material verunreinigtes Metallträgerteil voraus, damit Kontaktwiderstände beim Punktverschweißen so gering wie möglich gehalten werden können. Beim Ultraschallschweißen ist eine saubere Kontaktfläche Bedingung für eine höhere Leistungsaufnahme.

Aus der DE-AS 2 211 233 ist es z.B. bekannt, bandförmige Drahtnetze aus Nickel, vernickeltem Eisen oder Kupfer mit einem Aktivmasse-Pulver gleichmäßig zu beschichten, daraus einzelne Flächenstücke zuzuschneiden, diese durch flaches Umbiegen an den Rändern zu versteifen und Stromableiter an diskrete Stellen dieser verstärkten Randpartien anzuschweißen, nachdem die betreffenden Stellen zuvor von verdichtetem Aktivmaterial gesäubert worden sind. Diese Säuberung ist schwierig und bleibt oft unvollkommen.

Bei der Herstellung von Sinterfolienelektroden wird gewöhnlich ein massivmetallener Rand des Sinterbandes von der Imprägnierung mit dem Aktivmaterial ausgespart, an den im Bedarfsfall Ableiterfahnen problemlos angeschweißt werden können. Für die Aussparung des Randes müssen aber schon bei der Aufbringung der porösen Nickel-Sinterschichten auf das tragende Folienband entsprechende Vorkehrungen getroffen werden. Dies bedeutet gegenüber einer ganzheitlichen Verarbeitung des Trägerbandes einen zusätzlichen Aufwand.

Gemäß DE-PS 2 535 469 ist es indessen möglich, einen metallischen Ableiter direkt auf eine Sinterelektrode aufzuschweißen, wenn man das in dem porösen Elektrodengerüst eingelagerte aktive Material, z.B. Nickelhydroxid, zuvor an der vorgesehenen Kontaktstelle durch Auftropfen einer Lösung von Hydrazinhydrat oder Natriumboranat zum Metall reduziert.

Für wiederaufladbare Batteriesysteme werden auch Elektroden auf der Basis von Metallschaumgerüsten als Träger und Stromkollektoren eingesetzt. Die auf galvanischem Wege hergetellten bandförmigen Schaumstrukturen können wegen ihrer hohen Porosität von 95 bis 97% leicht durch Einschlämmen oder Pastieren mit Aktivmasse gefüllt werden und eignen sich besonders gut zur Herstellung von Wickelelektroden. Die Anbringung von Ableiterfahnen erfolgt beispielsweise so, daß die ausgewählten Kontaktstellen bereits vor dem Einbringen der Masse verdichtet und abgeklebt werden, daß das Trägerband darauf mit der Aktivmasse imprägniert, getrocknet und nachgewalzt wird und daß nunmehr nach Entfernung der Schutzmasken die von der pastösen oder suspendierten Masse nicht kontaminierten Stellen mit den Ableitern durch Schweißen verbunden werden.

Auch diese Verfahrensweise ist umständlich und zudem unrationell, weil wegen der Längenänderung, welche die Bänder bei Nachwalzen auf die vorgesehene Enddicke erfahren und welche bis zu 20% betragen kann, die endgültigen Positionen der Kontaktstellen nicht von vornherein präzise festgelegt werden können und beim späteren Ausstanzen oder Ablängen der Elektroden ein gewisser Verschnitt in Kauf genommen werden muß.

Aus der JA-A 55-14685 (Patent Abstracts of Japan, Vol.4, No. 44 (E-5)(526)) ist es bekannt, in ein mit Ableitern versehenes Metallschaumgerüst aktive Masse einzubringen und die gefüllte Elektrode anschließend mit einer PTFE-Dispersion zu imprägnieren. Durch Anblasen der Ableiter mit einem Preßluftstrahl werden Reste der aktiven Masse und das PTFE entfernt. Bei Verwendung von bandförmigem Trägermaterial besitzt diese Verfahrensweise ebenfalls die oben genannten Nachteile.

Der Erfindung liegt daher die Aufgabe zugrunde, eine Vorbehandlung an sich fertiger Metallschaumgerüst-Elektroden vor dem Anschweißen eines Fahnenableiters anzugeben, die eine saubere und homogene metallische Verbindung gewährleistet.

Die Aufgabe wird erfindungsgemäß durch ein Verfahren gelöst, wie es im Patentanspruch 1 definiert ist.

Danach hat sich eine Methode als erfolgreich erwiesen, bei der die vorgesehene Kontaktstelle einer Erhitzung ausgesetzt wird und daß anschließend das durch die Wärmeeinwirkung veränderte Aktivmaterial in den Poren des Metallschaums durch einen Ausblasvorgang entfernt wird.

Da die in das Metallschaumgerüst einpastierte oder eingeschlämmte Aktivmasse ein organisches Bindemittel enthält, ist es die thermische Zerstörung dieser organischen Substanz, welche das Aktivmaterial neben der Feuchtigkeit vor allem seiner Adhäsionsfähigkeit an den Porenwänden beraubt, so daß es sich nach der Erhitzung wie ein Trockenpulver verhält und von einem Druckgasstrahl, insbesondere einen Druckluftstrahl, leicht fortgeblasen werden kann.

Als Wärmequelle für die thermische Zersetzung kann z.B. ein beheizter Stempel, ein Laserstrahl oder eine Induktionsheizung dienen. Dabei ist die erforderliche Temperatur, je nach der thermischen Resistenz des zu entfernenden Bindemittels, in einem Bereich zwischen 300°C und 550°C anzusetzen.

Besonders vorteilhaft ist es, einen Heißluftstrahl, dessen Temperatur in dem angegebenen Bereich liegt, der vorzugsweise jedoch etwa 450°C heiß ist, gezielt auf die zu präparierende Stelle zu richten, bevor man mit einem Druckluftstrahl die Reinigung von allen nichtmetallischen Rückständen vornimmt. Zu deren zuverlässigen Entfernung sind Strahldrucke von 7 bis 8bar notwendig, wobei das Druckgas aus einer engen Düse ausströmt. Der damit verbundene Gasdurchsatz ist zu hoch, als daß ein solcher Druckluftstrahl gleichzeitig auch als Instrument zur thermischen Zersetzung herangezogen und damit als Wärmequelle genutzt werden könnte, weil der zum Temperieren solcher Luftmengen beispielsweise bei 450°C erforderliche Energieverbrauch nicht zu vertreten ist. Umgekehrt ist der einsetzbare Heißluftstrahl zu schwach, um zusätzlich das Ausblasen zu übernehmen.

Es ist ferner günstig, das Elektrodenband mit einem gut wärmeleitenden Metallblech, z.B. einem Kupferblech, abzudecken und aus diesem die Ansatzstelle für den Ableiter auszublenden, um mittels dieser Maske den Wärmestrom auf das für die Schweißverbindung notwendige Flächenelement, welches sich mit dem Umriß des Ableiterstreifens ungefähr deckt, zu konzentrieren.

Unter diesen Umständen wird das Bindemittel innerhalb 3 bis 12 sec., in den meisten Fällen innerhalb 5 bis 7 sec. zersetzt, ohne daß es zu einer nennenswerten Oxidation des Trägermetalls in diesem Bereich kommt.

Der konzentrierten Wärmeeinwirkung dient es auch, wenn ein Heißluftstrahl von zwei Seiten auf die Kontaktstelle gerichtet wird. Nachdem das Bindemittel des aktiven Materials auf diese Weise zerstört wurde, kann die behandelte Stelle leicht mit Druckluft oder einem Gebläsestrahl freigeblasen werden. Damit ist die Grundlage für eine einwandfreie Schweißverbindung mit dem Ableiter geschaffen.

Der fertigungstechnische Vorteil der erfindungsgemäßen Maßnahmen liegt vor allem darin, daß die Anbringung des Ableiters erst erfolgt, nachdem das Trägerband alle mit der Masse-Imprägnierung zusammenhängenden Behandlungen einschließlich Nachwalzen und Trocknen bereits durchlaufen hat, so daß keine exponierten Fahnen einem zügigen Transport des Bandes über Walzen. Führungseinrichtungen, Rollen und dergl. im Wege stehen oder selbst während des Transports beschädigt werden können. Die Positionen der vom Aktivmaterial zu säubernden Kontaktstellen auf dem Elektrodenband lassen sich mit dessen vorgesehener Aufteilung exakt abstimmen. Noch vorteilhafter ist es, die bereits auf Endmaß zugeschnittenen Elektroden nach diesem Verfahren zu behandeln. Von der erfindungsgemäßen Behandlung ist nur derjenige kleine Ausschnitt der Elektrodenfläche betroffen, welcher für die Schweißverbindung mit dem Ableiter-Streifen notwendig ist.

## Patentansprüche

1. Verfahren zum elektrischen und mechanischen Verbinden eines als Ableiter dienenden Metallstreifens mit der Elektrode eines galvanischen Elements, die als Träger ein Metallschaumgerüst besitzt, das mit aktiver Masse gefüllt ist, welche ein organisches Bindemittel enthält, dadurch gekennzeichnet, daß vor dem Anschweißen des Ableiters die vorgesehene Kontaktstelle einer Wärmequelle, welche die thermische Zerstörung des organischen Bindemittels bewirkt, und danach der Einwirkung eines Druckgasstrahls ausgesetzt wird.

2. Verfahren nach Anspruch 1, dadurch gekennzeichnet, daß die Kontaktstelle durch einen Heißluftstrahl auf eine Temperatur von 300°C bis 550°C, vorzugsweise auf etwa 450°C, erwärmt wird.

3. Verfahren nach Anspruch 2, dadurch gekennzeichnet, daß die Kontaktstelle mit einem Heißluftstrahl von zwei Seiten her erwärmt wird.

4. Verfahren nach Anspruch 1, dadurch gekennzeichnet, daß die Kontaktstelle mit einem beheizten Stempel, einem Laserstrahl oder einer Induktionsheizung erwärmt wird.

5. Verfahren nach einem der Ansprüche 1 bis 4, dadurch gekennzeichnet, daß die zu behandelnde Kontaktstelle durch Abdeckung der übrigen Elektrodenfläche mittels Masken eingegrenzt wird.

6. Verfahren nach Anspruch 5, dadurch gekennzeichnet, daß als Masken gut wärmeleitende Metallbleche, insbesondere Kupferblech, verwendet werden.

## Claims

1. Process for electrically and mechanically connecting a metal strip serving as a current collector to the electrode of a galvanic cell which has as the support a foam structure which is filled with active mass containing an organic binder, characterized in that before the current collector is welded on the contact point provided is exposed to a heat source which brings about thermal destruction of the organic binder, and is subsequently exposed to the action of a compressed gas stream.

2. Process according to Claim 1, characterized in that the contact point is heated by a hot air stream to a temperature of 300°C to 550°C, preferably to approximately 450°C.

3. Process according to Claim 2, characterized in that the contact point is heated with a hot air stream from two sides.

4. Process according to Claim 1, characterized in that the contact point is heated using a heated die, a laser beam or an induction heating means.

5. Process according to one of Claims 1 to 4, characterized in that the contact point to be treated is delimited by covering the rest of the electrode surface by means of masks.

6. Process according to Claim 5, characterized in that there are used as masks metal sheets which are good heat conductors, in particular copper sheet.

## Revendications

1. Procédé pour la liaison électrique et mécanique d'une bande de métal servant de collecteur de courant avec l'électrode d'un élément galvanique qui a comme support, une mousse métallique qui est remplie de masse active, laquelle contient un liant organique, procédé caractérisé en ce qu'avant le soudage du collecteur de courant, l'emplacement de contact prévu est exposé à une source de chaleur qui provoque la destruction thermique du liant organique, et qu'il est exposé ensuite à l'action d'un jet de gaz sous pression.

2. Procédé selon la revendication 1, caractérisé en ce que l'emplacement de contact est échauffé par un jet d'air chaud à une température de 300°C à 550°C, de préférence à environ 450°C.

3. Procédé selon la revendication 2, caractérisé en ce que l'emplacement de contact est échauffé des deux côtés, avec un jet d'air chaud.

4. Procédé selon la revendication 1, caractérisé en ce que l'emplacement de contact est échauffé avec un poinçon chauffé, un faisceau laser ou bien un chauffage par induction.

5. Procédé selon une des revendications 1 à 4, caractérisé en ce que les emplacements de contacts à traiter sont délimités en recouvrant les autres surfaces de l'électrode par des masques.

6. Procédé selon la revendication 5, caractérisé en ce que comme masque des conducteurs de la chaleur, on utilise des tôles métalliques, notamment une tôle de cuivre.
